# EUROPEAN PATENT SPECIFICATION

(11) **EP 0 318 672 B1**
(45) Date of publication and mention of the grant of the patent: **26.01.1994**
(21) Application number: 88116431.3
(22) Date of filing: 05.10.1988
(51) Int. Cl.: G01F 23/04, B08B 13/00

(54) **Device for checking the level and the movement of a mass in a vibrating machine**
Einrichtung zum Überprüfen des Füllstandes und der Bewegung einer Masse in einer vibrierenden Maschine
Dispositif pour contrôler le niveau et le mouvement d'une masse dans une machine vibrante

(30) Priority: 07.10.1987 IT 2217187
(43) Date of publication of application: 07.06.1989
(73) Proprietor: RENI CIRILLO S.r.l., I-20061 Carugate (Milan) (IT)
(72) Inventor: Reni, Mario, I-20061 Carugate MI (IT)

(56) References cited:
- DD-A- 210 488
- US-A- 4 387 593

## Description

This invention relates to a device for the checking of the level and the movement of the mass under process inside a vibrating machine.

In the mechanical industry, and particularly in plants producing small-sized metal items, the need arises for a series of finishing operations such as cleaning, degreasing, pickling and similar processes to be conducted on the pieces coming from the molding machine.

Generally speaking, these finishing operations are grouped under the term 'finishing' and are, in most cases, carried out with vibrating machines which assure excellent performances in an easy automatic way.

The finishing process is normally carried out with the help of aqueous solutions/suspensions of various chemical compounds having cleansing, pickling, abrasive or coloring power and is generally completed by the final washing and drying of the finished piece.

One of the major problems of the vibrating barrels (scroll or cradle-shaped) is represented by the difficulty in checking and keeping under control the mass under process into the vibrating bowl.

By mass under process we mean the solid material (chips with variable shape and size) acting as working media in the finishing process, the afore mentioned aqueous solution/suspensions of the chemical compounds and the pieces which are treated.

In some cases one or more of the above mentioned components is missing as, for example, in the case in which pieces rub against each other to achieve the abrasive or polishing effect or in the case of dry process, carried out without the addition of any liquid media.

The mass inside the vibrating machine is driven by a spiral motion resulting from the combination of the vertical and horizontal components of the vibratory force of the barrel.

The result of the finishing process depends on the optimization of said spiral motion which must be uniform and characterized by an excursion which must vary according to the type and size of the pieces, so that the risk of damaging of the surface of the pieces or obtaining bad results or no result at all is thoroughly eliminated.

In its turn, the movement of the mass depends upon various factors, such as the shape, size specific weight and abrasive power of the solid media (chips) fed into the vibrating machine, the type and quantity of the chemical compounds, the presence or the absence of a suspending liquid medium (generally water) and its ratio with the mass under process.

Furthermore, being the finishing treatment a batch process, another problem may arise because of the frequent variation of the ratio of the various components of the mass; in fact, chips change their shape and lose size and weight due to wear and the residuals are mixed with the chemical compounds fed into the vibrating machine.

These variations exert a considerable influence upon many important working parameters such as the pH values and/or the level of the mass into the vibrating machine.

The importance of a reliable control of the finishing process has led many users to investigate possible solutions to the problem; various measuring instruments have been fitted either to the frame of the vibrating machine or to the motor such as frequency-meters, vibrometers, amperometers.

All the instruments used up to the present day are capable of measuring the vibration rates of the machine but none of them is capable of giving immediate and precise data about the movement of the mass inside the machine which depends, as mentioned above, on many other factors.

Devices for the measurement of the level of powders in tanks are also known, as e.g. from USP 4,387,593 or DDP 210 488, but they are not suitable for the use in a vibrating machine.

The problem of a reliable control of the movement of the mass inside the vibrating machine has not been solved yet and most users of vibrating barrels are still making adjustments by relying solely on their visual observation and their experience.

The device of the present invention as disclosed in claim 1. makes it possible to measure both the level and the movement of the material being processed in a vibrating machine.

A fundamental feature of the present invention is that the above mentioned device is shaped like a reversed L and is endowed with vertical motion; a pin fitted to the short leg serves as support for another bar which swings as a pendulum around the pin.

Another fundamental feature is that the lower end of the pendulum bar is protected with a plate made of abrasion proof material while the upper end interacts with a detector which makes it possible to take readings of the time elapsed from the moment the lower end of the bar is vertically plunged into the mass under process up to the moment when the bar is moved by the mass and interacts with the detector.

A typical embodiment of the present invention will now be described by referring to the attached drawings, in which:

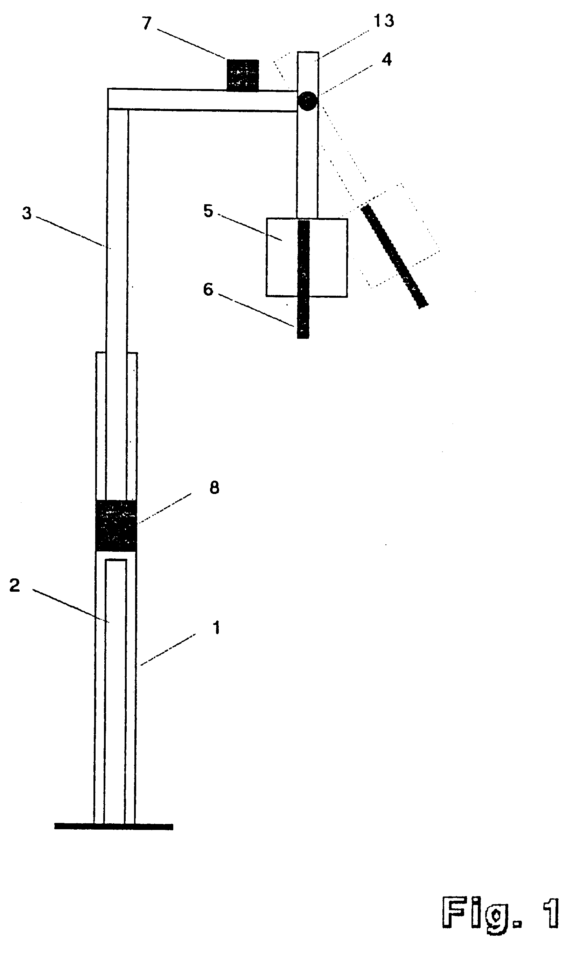

- Fig. 1 shows a vertical section of the measuring device;
- Fig. 2 shows a plan view of a vibrating machine equipped with the measuring device;
- Fig. 3 shows a vertical section of a vibrating machine equipped with the measuring device.

The reversed L-shaped bar 3 is driven upward and downward along support 1 by a hydraulic apparatus 2 at regular time intervals. The length of the work run is controlled by a ring 8. Bar 3 serves as support for another bar 5 which swings as a pendulum around a pin 4 fitted to the short leg of the reversed L. A detector 7 is also fitted to the short leg which interacts with the upper end of the pendulum bar 5 when this is plunged into and moved by the mass under process present inside the vibrating bowl 9, which is supported by a set of springs 11 and fixed to the supporting base 10.

The lower end 6 of the pendulum bar 5 is constituted by a plate made of abrasion-proof material.

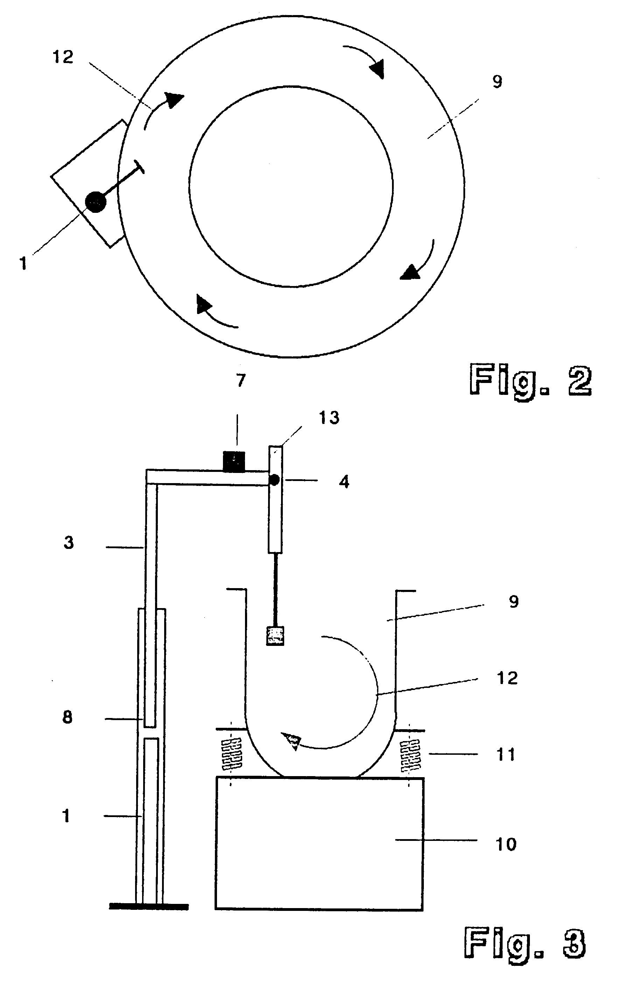

At regular and pre-set time intervals, the hydraulic apparatus 2 drives bar 3 down to a pre-determined point such that the end-plate 6 is completely immersed into the mass under process into the vibrating bowl 9. The movement of the mass follows the direction of the arrows 12 as shown in fig. 2 and 3.

The movement of the mass under process exerts an influence on bar 5 so that the upper end 13 of the same bar 5 is made to interact with detector 7 which allows the reading of the time elapsed from the moment bar 3 begins its dawnward run up to the moment when the upper end 13 of bar 5 interacts with the detector.

The time taken is proportional to the movement of the mass under process into a vibrating machine and allows an exact and immediate control of the movement during any type of finishing operation.

It is immediately apparent the utility of the device as per the present invention in detecting and curing possible faults of the finishing operations performed in a vibrofinishing barrel.

For instance, if the solid media (chips) are present in an amount not sufficient for a good performance, the level of the mass under process will be too low and the pendulum bar will not be made to interact with the detector.

On the other hand, if water is present in an amount lower than the needed one for a good wet finishing operation, the movement of the mass under process will be too fast and the time taken will be below the pre-set value for that specific operation.

According to a preferred embodiment of the device of the present invention, its detector is connected with and operates an alarm system whenever does not supply the required time values for the best performance of the finishing operations after a pre-determined number of essays.

According to another preferred embodiment of the device of the present invention, its detector is connected with and operates a magnetic unloading system suitable for unloading those pieces which can be magnetized (most of the pieces processed by vibrating machines) and which are present inside the vibrating barrel at the end of the finishing operations.

In this case, the detector allows a magnetic unloader to be progressively introduced into the vibrating machine by adjusting its lowering in relation to the level of the mass under process progressively decreasing due to the extraction of the finished pieces.

According to a further preferred embodiment of the device of the present invention, its detector is connected with a loading system for the processing media (chips). If the level of the chips into the vibrating machine is too low with respect to the desired level, the pendulum bar will not be moved by the mass under process or will be moved too little to operate the detector. Of consequence, the detector will start the chips loading system which will feed a small amount of chips in to the machine.
The level checking and the chips loading cycle will be repeated again and again until the required level is reached.

## Claims

1. Device for the measurement of the level and the movement of a material being processed in a vibrating machine, said device comprising:
- an elongate support (1)
- an inverted L - shaped bar (3) having a longer leg and a shorter leg, said longer leg being mounted in and movable vertically with respect to said support (1);
- a pendulum bar (5) which is pivotally supported on said shorter leg by means of a pin (4), and
- a detector (7) attached to said shorter leg and positioned such that said pendulum bar (5) can swing to interact therewith.

2. Device as per claim 1. characterized by the fact that the lower end (6) of the pendulum bar (5) is protected or constituted by a plate made of abrasion-proof material.

3. Device as per claim 1. characterized by the fact that the upper end (13) of the pendulum bar (5) exerts a force upon said detector (7) which supplies data on the time elapsed from the beginning of the measurement up to to the moment when detector (7) is set in action.

4. A system for the checking of the movement of a material being processed in a vibrating machine comprising a device as per claim 1. wherein the detector (7) is fitted in association with an alarm system which is operated whenever the time reading supplied by the detector (7) does not correspond with the value pre-set for the troublefree working conditions.

5. A system suitable for unloading metal pieces from a vibrating machine comprising a device as per claim 1. wherein the detector (7) allows a magnetic unloader to be introduced into the vibrating machine and progressively lowered down as the level of the material in a vibrating bowl (9) decreases due to the extraction of the finished pieces.

6. A system for the checking of the movement of the material being processed in a vibrating machine comprising a device as per claim 1. wherein the detector operates a loading device for the processing media (chips) as to keep the level of the material inside the vibrating bowl (9) constant during the entire processing period.

## Patentansprüche

1. Vorrichtung zum Messen des Pegels und der Bewegung eines in einem Vibrationsapparat bearbeiteten Materials, umfassend:
- einen länglichen Ständer (1),
- einen Stab (3) in Form eines umgekehrten L mit einem langen und einem kurzen Arm, wobei der längere Arm in dem Ständer (1) gelagert und darin vertikal beweglich ist,
- eine Pendelstange (5), die über einen Stift (4) schwenkbar an dem kürzeren Arm gelagert ist, und
- einen Detektor (7), der an dem kürzeren Arm angebracht und so positioniert ist, daß sich der Detektor und die Pendelstange (5) beim Schwingen gegenseitig beeinflussen.

2. Vorrichtung nach Anspruch 1, dadurch gekennzeichnet, daß das untere Ende (6) der Pendelstange (5) durch eine Platte geschützt oder gebildet wird, die aus verschleißfestem Material besteht.

3. Vorrichtung nach Anspruch 1, dadurch gekennzeichnet, daß das obere Ende (13) der Pendelstange (5) eine Kraft auf den Detektor (7) ausübt, der Daten liefert über die vom Beginn der Messung bis zu dem Zeitpunkt verstrichene Zeit, in dem der Detektor (7) in Tätigkeit versetzt worden ist.

4. System zum Untersuchen der Bewegung eines Materials, das in einem Vibrationsapparat mit einer Vorrichtung gemäß Anspruch 1 bearbeitet wird, wobei der Detektor (7) zusammen mit einem Alarmsystem eingebaut ist, das wirksam wird, wenn die von dem Detektor (7) gelieferte Zeitangabe nicht mit dem vorgewählten Wert für störungsfreie Betriebsbedingungen übereinstimmt.

5. System zum Abführen von Metallteilen aus einem Vibrationsapparat mit einer Vorrichtung nach Anspruch 1, wobei der Detektor (7) die Einführung eines magnetischen Entladeorgans in den Vibrationsapparat und dessen progressive Absenkung entsprechend der Abnahme der Füllstandshöhe des Materials in einem Vibrationsgefäß aufgrund der Abgabe der fertigen Teile zuläßt.

6. System zum Untersuchen der Bewegung des Materials, das in einem Vibrationsapparat mit einer Vorrichtung gemäß Anspruch 1 bearbeitet wird, wobei der Detektor für die Behandlung von Medien (Chips) eine Beladungseinrichtung so betätigt , daß die Füllhöhe des Materials in dem Vibrationsgefäß (9) während der gesamten Bearbeitungsdauer konstant bleibt.

## Revendications

1. Dispositif pour mesurer le niveau et le mouvement d'une masse a traiter à l'intérieur d'une machine vibrante, ce dispositif comprenant:
- un support allongé (1);
- une tige en forme d'une L majuscule renversée ayant un jambage plus long e l'autre plus court; le jambage le plus long étant movible verticalement par rapport à ledit support(1);
- une tige-pendule (5) montée sur le jambage le plus court au moyen d'une pivot (4);
- un détecteur (7) monté sur le jambage le plus court de telle façon que la tige-pendule (5) peut interagir avec celle-ci, pendant ses oscillations.

2. Dispositif selon la revendication 1., caractérisé en ce que l'extrémité inférieure (6) de la tige-pendu|e (5) est protégée ou constituée par une plaque réalisée en matériel résistant à l'abrasion.

3. Dispositif selon la revendication 1., caractérisé en ce que l'extrémité supérieure (13) de la tige-pendule (5) exerce une force sur ledit détecteur (7) qui fournit des données sur le temp qui s'écoule du debut de la mesuration jusqu'au moment où le détecteur (7) entre en action.

4. Système pour le contrôle du mouvement d'une masse à traiter à l'intérieur d'une machine vibrante comprenant un dispositif selon la revendication 1. caractérisé en ce que le détecteur (7) est monté en correspondance d'un système d'alarme qui est actionné chaque fois que la lecture du détecteur ne correspiond pas à la valeur prédéterminée pour des conditions de fonctionnement optimales.

5. Système apte à décharger des pièces métalliques d'une machine vibrante comprenant un dispositif selon la revendication 1. caractérisé en ce que le détecteur (7) permet l'introduction d'un déchargeur magnétique dans la machine et sa descente progressive lorsque le niveau de la masse dans la cuve (9) baisse à cause de l'extraction des piéces finies.

6. Système pour le contrôle du mouvement d'une masse à traiter à l'intérieur d'une machine vibrante comprenant un dispositif selon la revendication 1. caractérisé en ce que le détecteur actionne un dispositif de chargement des moyens de travail (chips) afin de garder le niveau de la masse à l'intérieur de la cuve (9) constant pendant le cycle de travail.
